(19) **Europäisches Patentamt**

**European Patent Office**

**Office européen des brevets**

(11) **EP 0 833 459 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(51) Int Cl.$^7$: **H04B 3/23**

(21) Anmeldenummer: **97113860.7**

(22) Anmeldetag: **11.08.1997**

(54) **Verfahren und Anordnung zur Begrenzung des Restechos**

Method and device for limiting the residual echo

Procédé et dispositif pour limiter l'echo résiduel

(84) Benannte Vertragsstaaten:
**DE ES FR GB IT**

(30) Priorität: **26.09.1996 DE 19639702**

(43) Veröffentlichungstag der Anmeldung:
**01.04.1998 Patentblatt 1998/14**

(73) Patentinhaber: **SIEMENS AKTIENGESELLSCHAFT
80333 München (DE)**

(72) Erfinder:
• **Pfeil von, Dirsko
82069 Hohenschäftlarn (DE)**
• **Waretzi, Erhard
85540 Haar (DE)**

(56) Entgegenhaltungen:
**DE-A- 3 430 187     DE-A- 4 135 790
US-A- 5 327 495**

**Beschreibung**

Die Erfindung betrifft ein Verfahren zur Begrenzung des Restechos nach Anspruch 1 und eine in einem unabhängigen Anspruch angegebene Anordnung hierzu.

Sprach-Echokompensatoren enthalten einen Restecho-Begrenzer, der kurz mit NLP (Non linear Process) bezeichnet wird. Nur wenn kein Gegensprechen erfolgt, also nur das störende Restechosignal zum sprechenden fernen Teilnehmer übertragen wird, ist dieser Schaltungsteil aktiviert. Wenn der nahe Teilnehmer oder beide Teilnehmer gleichzeitig sprechen, ist der NLP überbrückt. Ein aktivierter NLP sperrt dagegen das nicht weiter kompensierbare Echo, das durch Nichtlinearitäten im Echoweg - auch durch PCM-Codierung - verursacht wird.

Ein geeignetes Verfahren ist in der Offenlegungsschrift DE 41 35 790 A1 beschrieben. Eine Steuerung schaltet dann Signale an den Sendeausgang durch, wenn sie gerade noch über dem Pegel des Restechosignals liegen. Der Restechobegrenzer wird nur dann wirksam, wenn der ferne Teilnehmer auch spricht, auf keinen Fall aber während des Doppelsprechens. Um möglichst genau die Zeiten zu erkennen, in denen nur der ferne Teilnehmer spricht, ist eine Überwachung der ankommenden und abgehenden Signale durch Pegel-und Dämpfungsmessungen erforderlich. Da Sprache starke Lautstärkeschwankungen aufweist, müssen die Meßeinrichtungen Integrationsglieder enthalten. Mit zunehmender Integrationszeit nimmt auch die Genauigkeit der Messung zu. Andererseits sollen die Meßwerte rasch einer Veränderung im Echoweg folgen. Es ist also ein Kompromiß erforderlich.

Das Problem besteht darin, beide Kriterien ,also Genauigkeit und rasches Erkennen von Veränderungen im Echoweg, optimal zu erfüllen.

Dieses Problem wird durch das im Anspruch 1 angegebene Verfahren beziehungsweise die im unabhängigen Anspruch angegebene Anordnung gelöst.

Vorteilhafte Weiterbildungen der Erfindung sind in den abhängigen Ansprüchen beschrieben.

Der besondere Vorteil der Erfindung liegt in der Verwendung eines geeigneten Kriteriums, das sehr rasch Veränderungen im Echoweg erkennt, und in der Umschaltung der Zeitkonstanten der Integrationsglieder durch dieses Kriterium. Das Kriterium ist die Veränderung einer der Filterkoeffizienten. Ein besonderer Vorteil ergibt sich, wenn zusätzlich zu den Korrelatoren Hilfskorrelatoren vorgesehen werden, die bei Veränderungen stark anwachsen.

Vorteilhaft ist eine Umsetzung der gemessenen Signale in logarithmische Signale, da dann Dämpfungen durch einfache Subtraktion von Signalen (Pegeln) ermittelt werden können.

Die Schaltungen bzw. Rechenprozeduren können vereinfacht werden, wenn binäre Signale erzeugt werden, die in Zählern oder als Teil einer Rechenschaltung realisiert sind.

Um Störungen durch zu häufiges Umschalten der NLP zu vermeiden, ist es vorteilhaft, eine Nachwirkzeit von mehreren ms (120 ms) einzuführen, wenn die NLP durchgeschaltet hat. Dadurch wird sichergestellt, daß auch leisere Sprachanteile übertragen werden. Anstelle der Nachwirkzeit kann auch eine Hysterese beim Integrator bzw. einem nachgeschalteten Komparator vorgesehen werden. Das Steuerkriterium für die NLP kann auch zur Steuerung des Echokompensators verwendet oder mitverwendet werden. Diese können auch auf den gleichen Prinzipien beruhen aber mit "weicheren" Eingangskriterien ermittelt werden.

Ein vorteilhaftes Ausführungsbeispiel der Erfindung wird anhand von Figuren im folgenden beschrieben:

Es zeigen:

Figur 1     ein Prinzipschaltbild des Echokompensators,

Figur 2     ein Prinzipschaltbild der Steuerung für den Restechobegrenzer (NLP),

Figur 3     ein Ausführungsbeispiel für eine Integrationseinrichtung und

Figur 4     eine Variante der Integrationseinrichtung.

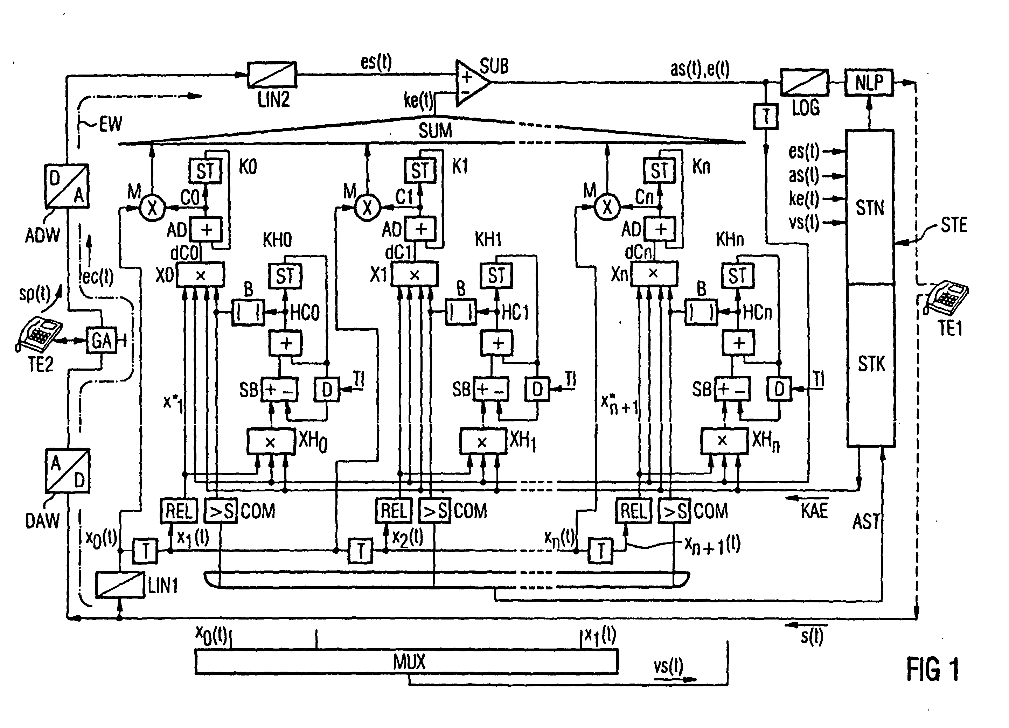

Figur 1 zeigt ein vorteilhaftes Ausführungsbeispiel eines Echokompensators, der außer den bekannten Korrelatoren K0 bis Kn zur Einstellung der Filterkoeffizienten diesen zugeordnete Hilfskorrelatoren KH0 bis KHn enthält.

Der dargestellte Echokompensator ist für PCM-codierte Signale ausgeführt. Die Fernsprechverbindung zwischen einem ersten Teilnehmer TE1 und einem zweiten "nahen" Teilnehmer TE2 weist eine derart lange Laufzeit auf, daß das vom ersten Teilnehmer TE1 erzeugte Sendesignal s(t) aufgrund der nicht ausreichenden Entkopplung sich über den Echoweg EW als Echosignal ec(t) störend bemerkbar macht. Die lange Laufzeit kann durch die Strecke, beispielsweise Satellitenverbindungen oder sehr lange Kabel bedingt sein, aber auch durch Codierungen der Signale, die beispielsweise einer Verringerung der Bitrate oder der Fehlerkorrektur dienen. Für den zweiten Teilnehmer TE2 wird das digitale Signal s(t) im Digital-Analog-Wandler DAW in ein analoges Signal umgesetzt. Das insbesondere in der Gabel entstehende Echosignal ec(t) wird zu dem Sprachsignal sp(t) des Teilnehmers addiert und im Analog-Digital-Wandler ADW in das Summensignal es(t) umgesetzt.

Der Echokompensator weist einen durch Register T gebildete Laufzeitkette aus, die zusammen mit den Multiplizierern M und dem Summierer SUM ein Transversalfilter bildet. Diesem Filter wird ein in lineare Signalwerte $x_0(t)$, $x_1(t)$, $x_2(t)$, ..., $x_n(t)$ umgesetztes Sprachsignal des ersten Teilnehmers TE1, das Sendesignal s(t) zugeführt. Die Register arbeiten mit dem Takt der übertragenen Datenwörter bzw. Abtastwerte.

Da komprimierte PCM-codierte Daten übertragen werden, ist es zweckmäßig, diese zunächst in lineare Daten rückumzusetzen. Dies erfolgt in einem Linearisierer LIN1.

Ein entsprechender Linearisierer LIN2 und Logarithmierer LOG werden in der anderen Übertragungsrichtung verwendet.

Den Korrelatoren K0 bis Kn sind an sich bekannte Relativiereinrichtungen REL vorgeschaltet, die die aktuellen Amplitudenwerte auf die vorhergehenden bezieht, und so Unterschiede der Amplitude, die ja der Lautstärke entspricht, ausgleicht. Es erfolgt also gewissermaßen eine Normierung.

Für die Betrachtung der Wirkungsweise wird zunächst angenommen, daß kein Gegensprechen erfolgt, also kein Sprachsignal sp(t) des ersten Teilnehmers zum Echosignal hinzuaddiert wird.

Der Echoentzerrer erzeugt mit Hilfe des Transversaalfilters ein Korrektursignal ke(t), das dem Echosignal ec(t) möglichst genau nachgebildet ist und von diesem subtrahiert wird. Das verbleibende Fehlersignal e(t) steuert die Korrelatoren, die jeweils aus einem einfachen Multiplizierer X0, X1, ... und einer aus einem Speicher ST und einem Addierer AD gebildeten Summationsschaltung bestehen.

Jeder Korrelator ermittelt einen Filterkoeffizienten C0, C1, ... mit dem das Sendesignal s(t) - nach der Umsetzung in ein relativiertes Sendesignal $x^*_0$, ..., $x^*_{n+1}$ und Verzögerung in den Laufzeitgliedern T (Registern) des Transversalfilters - in einem der Multiplizierer M multipliziert wird. Das relativierte Signal gleicht Unterschiede in der Lautstärke/Amplitude weitgehend aus. Häufig ist noch eine Anpassung der Größenordnungen des aufsummierten Wertes und dem benötigten Filterkoeffizienten erforderlich. Die von den Multiplizierern abgegebenen unterschiedlich verzögerten Signalanteile werden in einem Summierer SUM zu dem Korrektursignal ke(t) zusammengefaßt.

Dieses Signal wird in einem Subtrahierer von dem Echosignal bzw. einem Eingangssignal es(t) subtrahiert.

Jedem Korrelator ist ein Hilfskorrelator KH0 bis KHn zugeordnet. Dessen Multiplizierer XH0, XH1, ... werden dieselben Eingangswerte zugeführt, jedoch wird der gespeicherte Hilfskoeffizient regelmäßig mit Auftreten eines Taktimpulses (Zeitabstand beispielsweise 4 ms) verringert. Diese Funktion wird jeweils durch einen Dividierer D und einen Subtrahierer SB realisiert. Bei einem fehlenden oder/und unkorrelierten Signal wird der Hilfskoeffizient daher in Richtung Null verändert. Der Betrag des Hilfskoeffizienten HC0, HC1, ... - gewonnen im Betragsbildner B - steuert jeweils den zugeordneten Multiplizierer X0, X1, ... des zugehörigen Korrelators K0, K1, ... in der Weise, daß bei einem kleinen Betrag des Hilfskoeffizienten HC0, HC1, .... das Produkt dC0, dC1, ... aus dem relativierten Sendesignals $x^*_0$:. , ..., $x_{n+1}$ und dem Fehlersignal e(t) mit einem kleinen Faktor bewertet wird, während bei großen Werten des Hilfkoeffizienten ein entsprechend größerer Faktor zum Tragen kommt. Hierdurch ist das jeweilige Korrelationsprodukt dC0, dC1, ... mit von dem Hilfskoeffizienten abhängig.

Zu ergänzen ist noch, daß es ausreichend sein kann, als Eingangssignale für den Regelkreis nur das Vorzeichenbit des Fehlersignals oder ein relativiertes Fehlersignal und die höchstwertigen Bits des Hilfskoeffizienten zu verwenden. Ebenso ist es häufig ausreichend, z. B. die drei höchstwertigen Bits des relativierten Signals, dies sind drei höchstwertigen sich ändernden Bits des linearen Signals, zu verwenden.

Durch den Regelprozeß werden alle Filterkoeffzizienten so eingestellt, daß sich ein minimales Fehlersignal e(t) ergibt. Der Regelvorgang wird möglichst nur dann durchgeführt, wenn kein Gegensprechen erfolgt.

Beim Gegensprechen wird zusätzlich dem unerwünschten Echosignal ec(t) das Sprachsignal sp(t) des zweiten Teilnehmers TE2 überlagert und nach Subtraktion des Korrektursignals ke(t) das "Sendeweg-Ausgangssignal" as(t) zum ersten Teilnehmer TE1 übertragen.

Durch Gegensprechen wird der Regelvorgang erschwert. Eine Steuereinrichtung STE sorgt dafür, daß bei Gegensprechen der Regelvorgang unterbrochen wird.

Das angegebene Prinzipschaltbild kann bei der Realisierung schaltungsmäßig vereinfacht werden, indem Teile der Multiplizierer der Korrelatoren und Hilfskorrelatoren gemeinsam verwendet werden, im Zeitmultiplexbetrieb arbeiten oder als Teile einer Recheneinheit ausgeführt werden.

Wird davon ausgegangen, daß zunächst die Filter- und Hilfskoeffizienten Null sind und korrelierte Signale an einem Korrelator und dem zugehörigen Hilfskorrelator anliegen, dann nimmt zunächst der Hilfkoeffizient rasch zu während der Filterkoeffizient nur sehr langsam ansteigt. Mit größer werdendem Betrag des Hilfskoeffizienten, steigt der Filterkoeffizient zunächst immer steiler an, um dann aufgrund des Ausgleichsvorganges langsam seinen Endwert zu erreichen.

Da der Hilfskoeffizient nun fortlaufend verringert wird, sinkt sein Wert langsam, bis er Null wird.

In dem Ausführungsbeispiel wird dies - nicht linear - dadurch bewirkt, daß sein Wert durch einen konstanten Faktor (z.B. 64) dividiert und in einem Subtrahierer SB subtrahiert wird.

Ist der Wert des Hilfskoeffizienten wieder sehr gering geworden, haben Störungen durch unerkanntes Gegensprechen oder eine laute Umgebung des ersten Teilnehmers nur sehr kleine Auswirkungen auf die Filterkoeffizienten.

Hierdurch wird auch die Schaltung wieder unempfindlich gegen Störsignale, und das Regelverhalten ist äußerst stabil. Um schnell und sicher auf Veränderungen bei einer Verbindung reagieren zu können werden die Signale überwacht. Eine Änderung der Verbindungseigenschaften bewirkt eine Änderung der Filterkoeffizienten. Deshalb werden diese direkt oder indirekt überwacht, um ein geeignetes Kriterium zum Umschalten von Zeitkonstanten zu gewinnen.

Zu diesem Zweck sind Komparatoren COM vorgesehen, die die Hilfskoeffizienten mit Schwellwerten "S" vergleichen. Die Ausgänge der Komparatoren sind mit Eingängen eines ODER-Gatters OR verbunden, dessen Ausgangssignal an eine Steuereinrichtung STE durchgeschaltet wird.

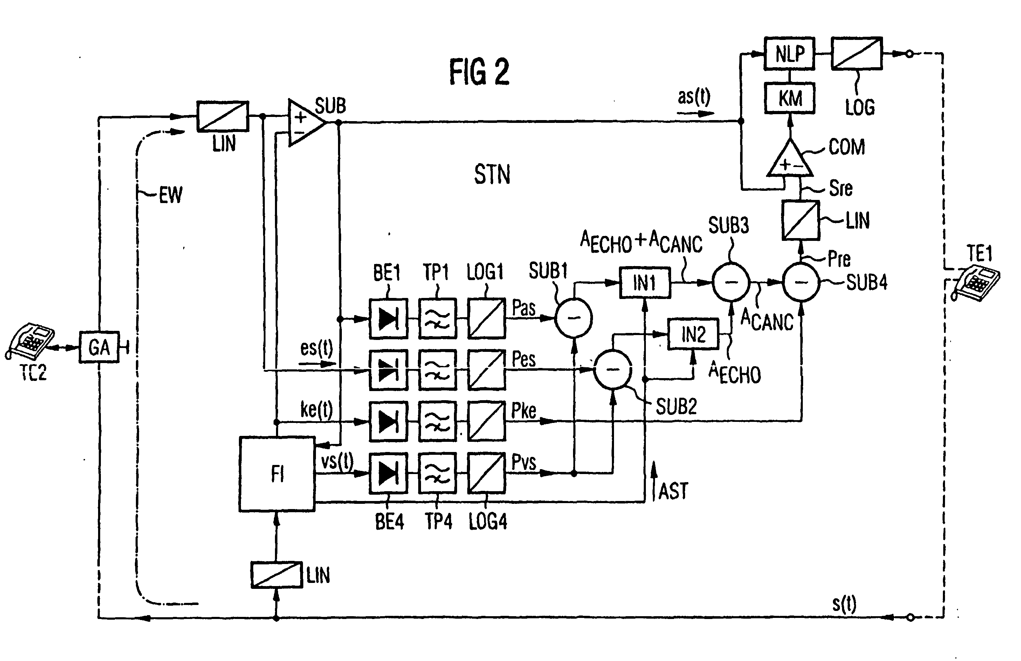

Ein Multiplexer MX schaltet auch jeweils eines der verzögerten Signale $x_0(t)$, $x_1(t)$, ... oder $x_{n+1}(t)$ als verzögertes Signal vs(t) an die Steuereinrichtung (Figur 2) für die NLP durch, der auch noch ein Signal se(t) vom Sendeweg-Eingang, ein Signal sa(t) vom Sendeweg-Ausgang und das Korrektursignals ke(t) zugeführt werden.

In der Steuereinrichtung werden die Pegel der anliegenden Signale geprüft und Dämpfungsberechnungen durchgeführt. Eine erste Steuerung STN (Figur 2)gewinnt hieraus Kriterien zur Steuerung der NLP. In diesem Ausführungsbeispiel steuert eine zweite Steuerung STK durch ein Signal KEA den Einsatz der Korrelatoren und Hilfskorrelatorer.

Wie in DE 41 35 790 A1 ausführlich beschrieben, wird der Steuereinrichtung STE dasjenige verzögerte Signal vs(t) zugeführt, das mit dem Echosignal am stärksten korreliert ist. Zur Auswahl der optimal verzögerten Signals werden innerhalb des Zeitintervalls zweier aufeinanderfolgender Abtastwerte (125 μs) zunächst (sequentiell) alle n Koeffizienten $C_0...C_n$ miteinander verglichen. Das dem größten Koeffizienten zugeordnete Signal $x_1(t)$, $x_2(t)$,..., $x_n(t)$ wird über den Multiplexer MUX durchgeschaltet.

Bevor auf weitere Einzelheiten der Schaltung eingegangen wird, soll zunächst das prinzipielle Verfahren erläutert werden. Das Restechosignal wird aus den gemessenen Signalen ermittelt und mit dem realen Signal as(t) am Sendeweg-Ausgangs verglichen. Ist das Signal auf dem Sendeweg-Ausgang größer, so spricht der Teilnehmer TE1 und sein Sprachsignal muß an den Ausgang A durchgeschaltet werden.

Zur Ermittlung des Restechosignals werden die Signale des Sendeweg-Eingangs und Sendeweg-Ausgangs es(t) und as(t), das Korrektursignal ke(t) und das verzögerte Signal vs(t) zunächst jeweils einer Betragsbildungseinrichtung BE1 bis BE4 zugeführt. Dies ist im Prinzipschaltbild der Figur 2 durch Gleichrichter angedeutet. Die Signale werden dann in einem Tiefpaß gesiebt, um stabile Werte zu erzielen. Anschließend erfolgt die Berechnung des Restechosignals. Um keine Multiplikationen bzw. Divisionen durchführen zu können, werden die Signale zunächst in Codeumsetzern CU1 bis CU4 in logarithmische Signale umgesetzt, die dann voneinander subtrahiert werden.

Die Echodämpfung $A_{ECHO}$ wird ermittelt, indem das Verhältnis des verzögerten Signales zum Echosignal gebildet wird bzw. nach der Umsetzung in logarithmische Größen P durch Subtraktion gewonnen wird.

$$(1) \qquad P_{vs}-P_{es} = A_{ECHO} \, ,$$

wenn es(t) = ec(t)

Außerdem gilt

$$(2) \qquad P_{vs}-P_{as} = A_{ECHO} + A_{CANC} \, ,$$

wenn es(t) = ec(t)
wobei $A_{CANC}$ die Kompensatordämpfung ist, die die Wirksamkeit des künstlichen Echosignals ke(t) angibt. Durch Subtraktion beider Gleichungen

$$(3) \qquad (A_{ECHO} + A_{CANC}) - A_{ECHO} = A_{CANC}$$

wird die Dämpfung des Kompensators ermittelt.

Verwendet man zur Berechnung des Restechopegels das einem künstlichen Echo entsprechende Korrektursignal ke(t) anstelle des realen Echosignals so ergibt sich

$$(4) \qquad P_{ke} - A_{CANC} = P_{re}$$

Das Ergebnis ist der ermittelte Pegel des Restechosignals. Durch den Linearisierer CU5 wird die Spannung des Restechos, vergrößert um eine Sicherheitsreserve, als Schwellspannung $S_{re}$ einem Komparator COM zugeführt und mit dem ebenfalls linearen Signal as(t) verglichen. Der Komparator vergleicht die so ermittelte Schwellspannung mit dem Signal as(t) des Sendeweg-Ausgangs SA. Sobald die Vergleichspannung durch die Spannung as(t) auf dem Sendeweg-Ausgang SA überschritten wird, wird die NLP unwirksam geschaltet, d.h. der Schalter wird geschlossen. Es ist eine Nachwirkzeit von mehreren ms (z.B. 120 ms) vorgesehen, die verhindert, daß der Schalter bei einem Unterschreiten der Vergleichsschwelle sofort wieder geöffnet wird. Dadurch wird sichergestellt, daß auch leisere Sprachanteile des Teilnehmers TE2 ungehindert übertragen werden. Die Nachwirkzeit kann durch eine retriggerbare monostabile Kippstufe KM realisiert werden.

Die vorstehenden Überlegungen gelten aber nur, wenn der Teilnehmer TE1 spricht und der "nahe" Teilnehmer TE2 schweigt (es(t) = ec(t)). Folglich wird - soweit erkennbar - die Messung nur dann freigegeben, wenn der "ferne" Teilnehmer TE1 spricht. Deshalb werden auch unter diesen Bedingungen Dämpfungsmessungen zur Steuerung der NLP durchgeführt. Es wird außerdem vorausgesetzt, daß die Zeiten , in denen nicht sicher erkennbar ist, daß es sich um Doppelsprechen handelt und fälschlicherweise zu geringe Dämpfungswerte gemessen werden, relativ kurz sind. Die während dieser Zeitabschnitte erfolgenden Fehlmessungen werden durch Integrationsglieder geglättet.

Es sind Integrationsglieder IN1, IN2 erforderlich, die die Ergebnisse der Subtraktionen glätten. Die entsprechenden Bedingungen sind:

a) $P_{vs}$ > -39 dBm0 als Kriterium, daß der "ferne" Teilnehmer TE1 spricht und

b) $P_{vs}$ > $P_{es}$ + 4dB als Kriterium dafür, daß der nahe Teilnehmer TE2 nicht spricht.

Ein wesentlich größerer Sicherheitsabstand als 4dB ist nicht möglich, weil die Echodämpfung im ungünstigen Fall nur 6 dB betragen kann.

Zugleich muß bei der Realisierung der nachstehend beschriebenen Schaltung wegen des begrenzten Auflösunsvermögens der Schaltung sein:

c) $P_{ve}$ > $A_{ECHO}$ bzw. $P_{vs}$ > $A_{ECHO}$ + $A_{CANC}$, weil eine Dämpfungmessung nur dann erfolgen kann, wenn der erste Teilnehmer TE1 mit einem Pegel spricht, der höher ist als der kleinste erfaßbare Pegel $P_{es}$ bzw. $P_{as}$ zusätzlich der Dämpfung.

Die Ergebnisse werden integriert und nochmals voneinander subtrahiert.

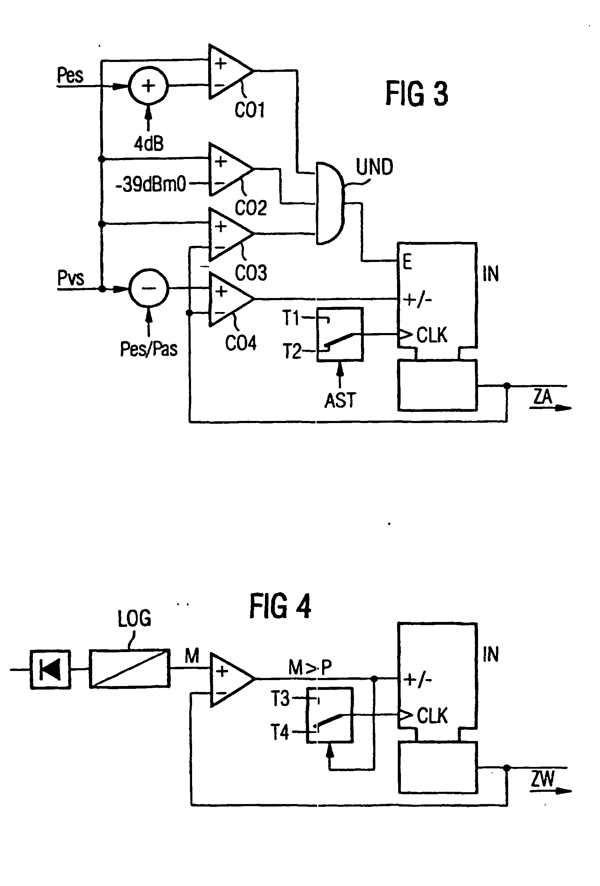

In Figur 3 ist eine Schaltung zur Überprüfung dieser Bedingungen, zur Subtraktion zweier Signale und anschließender Integration dargestellt. Sie beinhaltet einen der Subtrahierer SUB2 bzw. SUB3 und einen Integrator IN. Die Pegelbedingungen werden in Komparatoren CO1 bis CO3 überprüft. Über ein UND-Verknüpfungsglied UND wird die Dämpfungsmessung am Enable-Eingang E freigegeben. Ein Integrator IN glättet das Ergebnis der Subtraktion $P_{vs}$ - $P_{es}$ bzw. $P_{vs}$ - $P_{as}$. Als Integrator kann ein digitaler Tiefpaß verwendet werden. Es ist aber auch möglich, einen Aufwärts-Abwärts-/Zähler zu verwenden, dessen Zählrichtung von dem Vergleichsergebnis des Eingangssignals zum abgegebenen Zählwert (Komparator CO4) gesteuert wird. Ist der Zählwert ZA kleiner als der Eingangspegel des Vergleichers CU4, wird aufwärts gezählt, ist der Zählwert dagegen größer abwärts.

Der Komparator CO3 hält den Zähler auf seinem Maximalwert fest, wenn der Pegel $P_{vs}$ unter dem Zählwert ZA, der Dämpfung absinkt. Es sind auch Varianten üblich, die ein lansames Absinken des Zählerstandes gestatten. Bei jeder neuen Verbindung werden die Integrationsglieder zurückgestellt.

Die Zeitkonstante des Integrationsglieds ist umschaltbar. Dies geschieht durch das Anlegen zweier Taktsignale mit unterschiedlichen Frequenzen: T1 = 2kHz und TE2 = 31,25 Hz.

Als Kriterium für die Umschaltung wird, wie bereits erwähnt, die Änderung der Filterkoeffizienten ausgewertet. Da im vorliegenden Ausführungsbeispiel die Hilfskorrelatoren im ausgeregelten Zustand sehr kleine Hilfskoeffizienten aufweisen und schneller reagieren als die Korrelatoren, können die Beträge der Hilfskoeffizienten direkt ausgewertet werden. Jeder Hilfskoeffizient wird überprüft, cb er einen Schwellwert S überschreitet. Ist dies der Fall, so wird über das ODER-Gatter OR die Integrationszeit umgeschaltet, d.h. verkürzt. Das Abfragen der Hilfskoeffizienten kann selbstverständlich auch sequentiell erfolgen.

Anstelle eines Tiefpaßes mit anschließendem Logarithmierer zur Verarbeitung linearer Signale - wie in Figur 2 dargestellt, kann auch eine alternative Schaltung zur Verarbeitung logarithmischer Eingangssignale vorgesehen werden.

Eine entsprechende Schaltung ist in Figur 4 dargestellt. Als Tiefpaß ist ist wieder ein als Integriereinrichtung wirkender Zähler vorgesehen, der aufwärts zählt, wenn das Eingangssignal M größer ist als der Zählwert ZW, und abwärts zählt, wenn der Eingangswert kleiner ist als der Zählwert. Es werden Takte T3 und T4 mit unterschiedlichen Frequenzen, beispielsweise T3 = 8 KHz zum Aufwärtszählen und T4 = 2 KHz beim Abwärtszählen verwendet.

**Patentansprüche**

1. Verfahren zur Restechobegrenzung, bei dem das Echosignal (ec(t)) eines ersten Teilnehmers (TE1) durch ein Korrektursignal (ke(t)) weitgehend kompensiert wird, das mit Hilfe eines Filters (T, M, SUM) erzeugt wird, dessen Filter-Koeffizienten ($C_0$, $C_1$, ...) geregelt werden, und bei dem unter Verwendung von Siebgliedern (TP1 bis TP4; IN1, IN2) ein Steuersignal (SN) zur Betätigung eines Restechobegrenzers (NLP) erzeugt wird,
   **dadurch gekennzeichnet,**
   **daß** das Restechosignal e(t) oder das Echosignal (ec(t)) fortlaufend überwacht wird und
   **daß** bei einer durch eine Veränderung im Echoweg erfolgten Veränderung eines dieser Signale (e(t),ec(t)) die Zeitkonstanten des Siebglieder (TP1 bis TP4; IN1, IN2) vorübergehend verkleinert werden.

2. Verfahren nach Anspruch 1,
   **dadurch gekennzeichnet,**
   **daß** das Korrektursignal (ke(t)) mit Hilfe eines Filters (T, M, SUM) erzeugt wird, dessen Filter-Koeffizienten ($C_0$, $C_1$, ...) geregelt werden,
   **daß** eine Änderung der Filterkoeffizienten ($C_0$, $C_1$, ...) als Kriterium für eine Änderung des Echosignals (ec(t)) bzw. Restechosignals (e(t)) überwacht wird und
   **daß** bei einer ausreichend großen Veränderung der Filterkoeffizienten ($C_0$, $C_1$, ...) die Zeitkonstanten der Siebglieder (TP1 bis TP4) verkleinert werden.

3. Verfahren nach Anspruch 1,
   **dadurch gekennzeichnet,**
   **daß** jedem Filterkoeffizienten ($C_0$, $C_1$, ...) zugeordnete Hilfskoeffizienten ($HC_0$, $HC_1$, ...) aus dem Sendesignal (s(t)) des fernen ersten Teilnehmers (TE1) und dem verbleibenden Fehlersignal (e(t)) des korrigierten Echosignals (ec(t)) ermittelt werden, dass die Hilfskoeffizienten ($HC_0$, $HC_1$, ...) fortlaufend verringert werden,

und **daß** die Beträge der Hilfskoeffizienten ($C_0$, $C_1$, ...) zur Steuerung der Zeitkonstanten überwacht werden.

4. Verfahren nach Anspruch 2 oder 3,
   **dadurch gekennzeichnet,**
   **daß** zur Steuerung der Zeitkonstanten überprüft wird, ob die Veränderung eines der Filterkoeffizienten ($C_0$, $C_1$, ...) oder der Betrag eines Hilfskoeffizienten ($HC_0$, $HC_1$, ...) einen ersten Schwellwert überschreitet.

5. Verfahren nach Anspruch 2 oder 3,
   **dadurch gekennzeichnet,**
   **daß** zur Steuerung der Zeitkonstanten die Summe der Beträge der Veränderungen von Filterkoeffizienten ($C_0$, $C_1$, ...) oder die Summe der Hilfskoeffizienten ($HC_0$, $HC_1$, ...) überwacht wird.

6. Verfahren nach einem der vorhergehenden Ansprüche,
   **dadurch gekennzeichnet,**
   **daß** zur Ermittlung des Steuersignals (SN) herangezogene Signalwerte (vs(t), es(t), as(t), ke(t)) in logarithmische Werte umgesetzt werden, aus denen durch Subtraktion Dämpfungswerte ($A_{ECHO}$, $A_{ECHO} + A_{CANC}$) und unter Verwendung von vor- und/oder nachgeschalteten Siebeinrichtungen ein zweiter dem Restechosignal e(t) entsprechender Schwellwert (SRE) gewonnen wird.

7. Verfahren nach Anspruch 1,
   **dadurch gekennzeichnet,**
   **daß** nur dann die Messungen freigegeben werden, wenn das empfangene Sendesignal (s(t)) des fernen Teilnehmers einen Mindestpegel überschreitet und die Signale in beiden Übertragungsrichtungen vorgegebene Pegelunterschiede aufweisen.

8. Anordnung zur Restechobegrenzung mit einem Echokompensator, der ein Filter (T, M, SUM) mit steuerbaren Filterkoeffizienten ($C_0$, $C_1$, ...) zur Erzeugung eines Korrektursignal (ke(t)) auafweist, mit einer Siebglieder (TP1, Tp2; IN1, IN2) aufweisenden Steuereinrichtung (STE) zur Spracherkennung, die ein Steuersignal zum Betätigen des Restechobegrenzers (NLP) erzeugt,
   **dadurch gekennzeichnet,**
   **daß** eine Überwachungseinrichtung (COM, OR) vorgesehen ist, die eine Veränderung des Echosignals (ec(t)) überprüft und
   **daß** die Siebglieder (TP1, TP2; IN1, IN2...) umschaltbare Zeitkonstanten aufweisen, die bei einer durch eine Änderung im Echoweg erfolgten Veränderung des Echosignals (ec(t)) die Zeitkonstanten der Siebglieder (TP1, Tp2; IN1, IN2) vorübergehend verkleinern.

9. Anordnung nach Anspruch 8,
   **dadurch gekennzeichnet,**
   **daß** der Echokompensator Korrelatoren (K0...Kn) zur Ermittlung der Filterkoeffizienten ($C_0...C_n$) aufweist, daß den Korrelatoren (K0, K1, ..) zugeordnete Hilfskorrelatoren (HK0, HK1, ...) vorgesehen sind, deren Hilfskoeffizienten ($HC_0$, $HC_1$, ...) fortlaufend verringert werden, und daß die Hilfskorrelatoren (HKO, HK1, ...) die Arbeitsweise der Korrelatoren (K0...Kn) mit steuern.

10. Anordnung nach einem der Ansprüche 8 oder 9,
    **dadurch gekennzeichnet,**
    **daß** Logarithmierer (LOG1, LOG2,...) vorgesehen sind, denen lineare Signale über erste Siebglieder (TP1, TP2, ...) zugeführt werden,
    **daß** Subtrahierer (SUB) zur Dämpfungsberechnung vorgesehen sind, und daß den Subtrahierern (SUB) umschaltbare Siebglieder (IN1 bis N2) nachgeschaltet sind.

11. Anordnung nach einem der Ansprüche 8 bis 10,
    **dadurch gekennzeichnet,**
    **daß** als Siebglieder Aufwärts-/Abwärtszähler (IN) vorgesehen sind, deren Taktfrequenz umschaltbar ist.

12. Anordnung nach einem der vorhergehenden Ansprüche 8 bis 11,
    **dadurch gekennzeichnet,**
    **daß** die Spracherkennung Logarithmierer (LOG1-LOG4) aufweist, denen jeweils ein Siebglied (TP1-TP4) vorgeschaltet ist,
    **daß** Subtrahierer (SUB1, SUB2) vorgesehen sind, in denen die Echodämpfung ($A_{ECHO}$) und die Kompensatordämpfung ($A_{ECHO}+A_{CANC}$) ermittelt wird,
    **daß** den Subtrahierern (SUB1, SUB2) Siebglieder (IN1, IN2) mit umschaltbarer Zeitkonstante nachgeschaltet sind und daß die Ausgangssignale der Subtrahierer (SUB1, SUB2) zur Ermittlung der Größe des Restechodämpfung ($A_{canc}$) voneinander subtrahiert werden und daß in einem weiteren Subtrahierer (SUB4), dem das Korrektursignal zugeführt wird, der Pegel des ermittelten Restechosignals gewonnen wird.

13. Anordnung nach Anspruch 12,
    **dadurch gekennzeichnet,**
    **daß** Komparatoren (CO1, CO2) vorgesehen sind, die folgende Kriterien auswerten

    • Sendesignal (s(t)) > Echosignal (ec(t))
    • Sendesignal (s(t)) > Minimalwert
    • und nur bei Erfüllung beider Kriterien die Messung freigeben.

**14.** Anordnung nach einem der vorhergehenden Ansprüche 8 bis-13,
**dadurch gekennzeichnet,**
**daß** die Beträge von Signalen oder Pegeln ($P_{vs}$ - $P_{es}$, $P_{vs}$ - $P_{as}$) über einen Komparator (CO4) dem Steuereingang (+/-) eines der als Aufwärts-Abwärts-Zähler ausgebildeten Siebglieder (IN) zugeführt werden, dessen Zählstand auf den Vergleichseingang des Komparators (CO4) rückgeführt ist.

**15.** Anordnung nach Anspruch 14,
**dadurch gekennzeichnet,**
**daß** eine Umschalteinrichtung vorgesehen ist, über die Taktsinale (T1, T2; T3, T4) mit unterschiedlichen Frequenzen an den Takteingang des Aufwärts-Abwärts-Zählers (IN) anlegbar sind.

**Claims**

**1.** Method for limiting residual echo, in which the echo signal (ec(t)) of a first subscriber (TE1) is largely compensated for by a correction signal (ke(t)) which is created with the aid of a filter (T, M, SUM) of which the filter coefficients ($C_0$, $C_1$, ...) are controlled, and for which filter elements (TP1 to TP4; IN1, IN2) are used to generate a control signal (SN) for activating a non linear process (NLP),
**characterized in that**
the residual echo signal e(t) or the echo signal (ec(t)) is continuously monitored and
for a change in one of these signals e(t), ec(t) as a result of a change in the echo path the tme constants of the filter elements (TP1 to TP4; IN1, IN2) are temporarily reduced.

**2.** Method in accordance with claim 1,
**characterized in that**
the correction signal (ke(t)) is created with the aid of a filter (T, M, SUM) for which the filter coefficients ($C_0$, $C_1$, ...) are controlled,
a change in the filter coefficients ($C_0$, C1, ...) is monitored as criterion for change in the echo signal (ec(t)) or residual echo signal (e(t)) and
for a sufficiently large change in the filter coefficients ($C_0$, $C_1$, ...) the time constant of the filter elements (TP1 to TP4) is reduced.

**3.** Method. in accordance with claim 1,
**characterized in that**
auxiliary coefficients ($HC_0$, $HC_1$, ...)assigned to each filter coefficient ($C_0$, $C_1$, ...) are determined from the send signal (s(t)) of the remote first subscriber (TE1) and the remaining error signal (e(t)) of the corrected echo signals (ec(t)), the auxiliary coefficients ($HC_0$, $HC_1$, ...) are continuously reduced,
and the amounts of the auxiliary coefficients ($C_0$, $C_1$, ...) are used to control the time constants,

**4.** Method in accordance with claim 2 or 3,
**characterized in that**
to control the time constants a check is made as to whether the change to one of the filter coefficients ($C_0$, $C_1$, ...) or the amount of an auxiliary coefficient ($HC_0$, $HC_1$, ...) exceeds a first threshold value.

**5.** Method in accordance with claim 2 or 3,
**characterized in that**
to control the time constants the sum of the amounts of the changes to the filter coefficients ($C_0$, $C_1$, ...) or the sum of the auxiliary coefficients ($HC_0$, $HC_1$, ...) is monitored.

**6.** Method in accordance with one of the previous claims,
**characterized in that**,
signal values (vs(t), es(t), as(t), ke(t)) used to determine the control signal (SN) are converted into logarithmic values from which through subtraction attenuation values ($A_{ECHO}$, $A_{ECHO}$ + $A_{CANC}$) and using upstream or downstream filter units a second threshold value (SRE) corresponding to the residual echo signal e(t) is obtained.

**7.** Method in accordance with claim 1,
**characterized in that**
the measurements are only enabled if the receiving send signal (s(t)) of the remote subscriber exceeds a minimum level and the signals exhibit predetermined level differences in both directions of transmission.

**8.** Arrangement for residual echo limiting with an echo compensator, which features a filter (T, M, SUM) with controllable filter coefficients ($C_0$, $C_1$, ...) to generate a correction signal (ke(t)), with a control device (STE) featuring filter elements (TP1, TP2; ... IN1, IN2) for detecting speech which generates a control signal for activating the non linear process (NLP),
**characterized in that**
a supervision device (SCOM, OR) is provided which checks for a change to the echo signal (ec(t)).and the filter elements (TP1, TP2; ... IN1, IN2) feature time constants which can be switched over, which, for a change in the echo signal (ec(t)) caused by a change in the echo path the time contstants of the supression elements (TP1, TP2; IN1, IN2) temporarily reduce.

**9.** Arrangement in accordance with claim 8,
**characterized in that**
the echo compensator features correlators (K0 ...

Kn) for determining the filter coefficients ($C_0$ ...$C_n$), auxiliary correlators (HKO, HK1, ...) assigned to the correlators (K0, K1, ..) are provided, for which the auxiliary coefficients ($HC_0$, $HC_1$, ...) are continuously reduced, and the auxiliary correlators (HKO, HK1, ...) help to control the functioning of the correlators (K0 ...Kn).

10. Arrangement in accordance with one of the claims 8 or 9,
   **characterized in that**
   logarithmers (LOG1, LOG2,...) are povided, to which linear signals are routed via first filter elements (TP1, TP2, ...), subtractors (SUB) are provided for calculating attenuation and that switchable filter elements (IN1 to N2) are downstream from the subtractors.

11. Arrangement in accordance with one of the claims 8 to 10,
   **characterized in that**,
   upwards/downwards counters (IN) with switchable clock frequencies are provided as filter elements.

12. Arrangement in accordance with one of the previous claims 8 to 11,
   **characterized in that**
   the speech detection features logarithmers (LOG1-LOG4) upstream from which a filter unit (TP1-TP4) in each case, subtracters (SUB1, SUB2) are provided, in which the echo attenuation ($A_{ECHO}$) and the compensator attenuation ($A_{ECHO}+A_{CANC}$) is determined,
   downstream from the subtracters (SUB1, SUB2) are filter units (IN1, IN2) with switchable time constants are and the output signals of the subtracters (SUB1, SUB2) are subtracted from each other to determine the size of the residual echo attenuation ($A_{CANC}$) and that in a further subtracter (SUB4), to which the correction signal is fed, the level of the residual echo signal determined is obtained.

13. Arrangement in accordance with claim 12,
   **characterized in that**
   comparators (CO1, CO2) are provided which evaluate the following criteria

   • send signal (s(t)) > echo signal (ec(t))
   • send signal (s(t)) > minimum value
   • and only if both criteria are fulfilled is measurement enabled.

14. Arrangement in accordance with one of the previous claims 8 to 13,
   **characterized in that**
   the amounts of signals or levels ($P_{vs}$ - $P_{es}$, $P_{vs}$ - $P_{as}$) are fed via a comparator (CO4) to the control input (+/-) of a filter unit (IN) embodied as an upwards/downwards counter, of which the count state is fed back to the comparison input of the comparator (C04).

15. Arrangement in accordance with claim 14,
   **characterized in that**
   a switchover device is provided, via which the clock signals (T1, T2; T3, T4) can be applied with different frequencies to the clock input of the upwards/downwards counter (IN).

**Revendications**

1. Procédé pour limiter l'écho résiduel, dans lequel le signal d'écho (ec(t)) d'un premier abonné (TE1) est largement compensé par un signal de correction (ke(t)) qui est généré à l'aide d'un filtre (T, M, SUM) dont on règle les coefficients de filtrage ($C_0$, $C_1$, ...), et dans lequel est généré, moyennant l'utilisation d'organes de filtrage (TP1 à TP4; IN1, IN2), un signal de commande (SN) pour actionner un limiteur d'écho résiduel (NLP),
   **caractérisé en ce que**
   on surveille continuellement le signal d'écho résiduel e(t) ou le signal d'écho (ec(t)) et
   étant donné une modification de l'un de ces signaux (e(t), ec(t)) s'étant produite du fait d'une modification sur l'itinéraire des courants d'échos, les constantes temporelles des organes de filtrage (TP1 à TP4; IN1, IN2) subissent temporairement une réduction.

2. Procédé selon la revendication 1,
   **caractérisé en ce que**
   le signal de correction (ke(t)) est généré à l'aide d'un filtre (T, M, SUM) dont on règle les coefficients de filtrage ($C_0$, $C_1$, ...),
   on surveille une modification des coefficients de filtrage ($C_0$, $C_1$, ...) en tant que critère pour une modification du signal d'écho (ec(t)) resp. du signal d'écho résiduel (e(t)) et
   dans le cas d'une modification suffisamment grande des coefficients de filtrage ($C_0$, $C_1$, ...), on réduit les constantes temporelles des organes de filtrage (TP1 à TP4).

3. Procédé selon la revendication 1,
   **caractérisé en ce que**
   on détermine des coefficients auxiliaires ($HC_0$, $HC_1$, ...) affectés à chaque coefficient de filtrage ($C_0$, $C_1$, ...) à partir du signal d'émission (s(t)) du premier abonné distant (TE1) et du signal d'erreur restant (e(t)) du signal d'écho corrigé (ec(t)),
   on réduit continuellement les coefficients auxiliaires ($HC_0$, $HC_1$, ...) et
   on surveille les valeurs absolues des coefficients auxiliaires ($C_0$, $C_1$, ...) pour la commande des constantes temporelles.

**4.** Procédé selon la revendication 2 ou 3, **caractérisé en ce qu'**on contrôle, pour la commande des constantes temporelles, si la modification de l'un des coefficient de filtrage ($C_0$, $C_1$, ...) ou la valeur absolue d'un coefficient auxiliaire ($HC_0$, $HC_1$, ...) dépasse une première valeur seuil.

**5.** Procédé selon la revendication 2 ou 3, **caractérisé en ce que**, pour la commande des constantes temporelles, on surveille la somme des valeurs absolues des modifications de coefficients de filtrage ($C_0$, $C_1$, ...) ou la somme des coefficients auxiliaires ($HC_0$, $HC_1$, ...).

**6.** Procédé selon l'une des revendications précédentes, **caractérisé en ce que** des valeurs de signal (vs(t), es(t), as(t), ke(t)) auxquelles il est fait appel pour la détermination du signal de commande (SN) sont converties en valeurs logarithmiques dont on tire des valeurs d'atténuation ($A_{ECHO}$, $A_{ECHO} + A_{CANC}$) par soustraction et, moyennant l'utilisation d'équipements de filtrage montés en amont et/ou en aval, une deuxième valeur seuil (SRE) correspondant au signal d'écho résiduel e(t).

**7.** Procédé selon la revendication 1, **caractérisé en ce que** les mesures ne sont permises que lorsque le signal d'émission reçu (s(t)) de l'abonné distant dépasse un niveau minimal et les signaux présentent des différences de niveau prédéterminées dans les deux sens de transmission.

**8.** Dispositif pour limiter l'écho résiduel avec un compensateur d'écho qui comporte un filtre (T, M, SUM) avec des coefficients de filtrage commandables ($C_0$, $C_1$, ...) pour générer un signal de correction (ke(t)), avec un équipement de commande (STE) pour la reconnaissance vocale, comportant des organes de filtrage (TP1, TP2; IN1, IN2), lequel génère un signal de commande pour actionner le limiteur d'écho résiduel (NLP), **caractérisé en ce que** un équipement de surveillance (COM, OR) est prévu, lequel contrôle une modification du signal d'écho (ec(t)) et les organes de filtrage (TP1, TP2; IN1, IN2) comportent des constantes temporelles commutables qui, étant donné une modification du signal d'écho (ec(t)) s'étant produite suite à une modification sur l'itinéraire des courants d'échos, réduisent temporairement les constantes temporelles des organes de filtrage (TP1, TP2; IN1, IN2).

**9.** Dispositif selon la revendication 8, **caractérisé en ce que** le compensateur d'écho comporte des corrélateurs (K0, ..., Kn) pour la détermination des coefficients de filtre ($C_0$, ..., $C_n$), **en ce que** sont prévus des corrélateurs auxiliaires (HKO, HK1, ...) affectés aux corrélateurs (K0, K1, ...), dont on réduit continuellement les coefficients auxiliaires ($HC_0$, $HC_1$, ...) et **en ce que** les corrélateurs auxiliaires (HKO, HK1, ...) co-commandent le fonctionnement des corrélateurs (K0, ..., Kn).

**10.** Dispositif selon l'une des revendications 8 ou 9, **caractérisé en ce que** sont prévus des logarithmeurs (LOG1, LOG2, ...) auxquels on affecte des signaux linéaires par l'intermédiaire de premiers organes de filtrage (TP1, TP2, ...), sont prévus des soustracteurs (SUB) pour le calcul de l'atténuation et **en ce que** des organes de filtrage commutables (IN1 à N2) sont montés en aval des soustracteurs (SUB).

**11.** Dispositif selon l'une des revendications 8 à 10, **caractérisé en ce que** sont prévus, en tant qu'organes de filtrage, des compteurs haut / bas (IN) dont la fréquence de cycle est commutable.

**12.** Dispositif selon l'une des revendications précédentes 8 à 11, **caractérisé en ce que** la reconnaissance vocale comporte des logarithmeurs (LOG1-LOG4) en amont desquels est respectivement monté un organe de filtrage (TP1-TP4), des soustracteurs (SUB1, SUB2) sont prévus, dans lesquels on détermine l'atténuation d'écho ($A_{ECHO}$) et l'atténuation du compensateur ($A_{ECHO} + A_{CANC}$), des organes de filtrage (IN1, IN2) avec constante temporelle commutable sont montés en aval des soustracteurs (SUB1, SUB2) et les signaux de sortie des soustracteurs (SUB1, SUB2) sont soustraits l'un de l'autre pour déterminer la grandeur de l'atténuation d'écho résiduel ($A_{CANC}$) et dans un autre soustracteur (SUB4) auquel est amené le signal de correction, on obtient le niveau du signal déterminé d'écho résiduel.

**13.** Dispositif selon la revendication 12, **caractérisé en ce que** sont prévus des comparateurs (CO1, CO2) qui évaluent les critères suivants:

- signal d'émission (s(t)) > signal d'écho (ec(t)),
- signal d'émission (s(t)) > valeur minimale et
- mesure permise uniquement si les deux critères sont remplis.

**14.** Dispositif selon l'une des revendications précédentes 8 à 13,
**caractérisé en ce que**
les valeurs absolues de signaux ou niveaux ($P_{vs}$ - $P_{es}$, $P_{vs}$ - $P_{as}$) sont amenées, par l'intermédiaire d'un comparateur (C04), à l'entrée de commande (+/-) de l'un des organes de filtrage (IN) réalisé en tant que compteur haut / bas, dont l'état de comptage est ramené sur l'entrée de comparaison du comparateur (CO4).

**15.** Dispositif selon la revendication 14,
**caractérisé en ce**
**qu'**est prévu un équipement de commutation par l'intermédiaire duquel des signaux d'horloge (T1, T2; T3, T4) peuvent être appliqués à l'entrée d'horloge du compteur haut / bas (IN) avec des fréquences différentes.

FIG 1

FIG 2

## FIG 3

Pes ⊕ 4dB

CO1
CO2
-39dBm0
CO3
Pvs ⊖ Pes/Pas
CO4

UND

E    IN
+/-
T1
T2
AST
CLK

ZA

## FIG 4

LOG    M

M > P

IN
+/-
T3
T4
CLK

ZW